# EUROPEAN PATENT APPLICATION

(11) **EP 4 581 927 A1**
(43) Date of publication of application: **09.07.2025**
(21) Application number: 23860216.3
(22) Date of filing: 25.08.2023
(51) Int. Cl.: A01K 1/03

(54) **LABORATORY ANIMAL BREEDING CAGE AND METHOD FOR PRODUCING SAME**

(30) Priority: 29.08.2022 JP 2022136244
(71) Applicant: Fuji Bakelite Co., Ltd, Oda-gun, Okayama 714-1298 (JP)
(72) Inventor: SENOO, Ryuji, Oda-gun, Okayama 714-1298 (JP); NISHIYAMA, Eri, Oda-gun, Okayama 714-1298 (JP); KONDO, Yasuyuki, Oda-gun, Okayama 714-1298 (JP); SAKAMOTO, Takaki, Oda-gun, Okayama 714-1298 (JP)
(74) Representative: Müller-Boré & Partner Patentanwälte PartG mbB
(86) International application number: PCT/JP2023/030726
(87) International publication number: WO 2024/048454

(57) **Abstract**

There is provided a laboratory animal breeding cage 1 comprising a bottom 2 and a side wall 3 and having an opening at the top, whose shape in a planar view is rectangular, wherein the cage 1 is made up of a transparent part 5 made of a transparent thermoplastic resin and an opaque part 6 made of an opaque resin composition comprising a thermoplastic resin and a filler; at least corner sections 7 of the upper surface 2a of the bottom 2 are made up of the opaque part 6 while at least the upper half of the side wall 3 is made up of the transparent part 5; and the transparent part 5 and the opaque part 6 are adhered to each other. Thus, there is provided a laboratory animal breeding cage which is excellent in visibility and enables easy removal of deposited excrement.

## Description

### Technical Field

The present invention relates to a laboratory animal breeding cage, which allows for easy removal of deposited excrement on the cage surface, and a producing method therefor.

### Background Art

Cages for breeding laboratory animals such as mice, rats, and guinea pigs are typically one-piece molded articles, and the upper opening is covered with a lid in use. Since it is important to be able to visually check the condition of the laboratory animals from outside of the cage, the cage is usually made of a transparent thermoplastic resin (see, for example, Patent Reference No. 1).

After the laboratory animals are bred for a predetermined period of time, the cage is washed and, if necessary, sterilized with an autoclave or the like before being reused. Since the cage is required to be transparent and heat resistant, it is made of a heat-resistant transparent thermoplastic resin such as a polycarbonate, polymethylpentene, and polysulfone. After breeding the animals in the cage, excrement of the laboratory animals deposited on the bottom of the cage, which must be removed, but it is not easy to remove the dry excrement that have deposited during a long breeding period.

Patent Reference No. 2 has described an animal container produced by molding a molding material made of a ring-opened polymer of a norbornene monomer or a hydrogenated product thereof. It is said that by using such a cyclic olefin polymer, an animal container can be provided, which is transparent, excellent in chemical resistance and impact resistance, and allows for easily washing out animal excrement. However, even when a cyclic olefin polymer is used, it is still not easy to remove excrement deposited on a container surface.

There has been proposed a method in which a disposable thin transparent plastic cover is placed inside the cage to fit the shape of the cage, in which experimental animals are bred, and after each breeding, the cover is discarded. However, this method leads to increase in plastic waste and inevitably reduces visibility of the inside of the cage.

### Citation List

### Patent Literature

Patent Literature 1: JP 2012-29619 A
Patent Literature 2: JP 11-9126 A

### Summary of Invention

### Technical Problem

To solve the above problems, an objective of the present invention is to provide a laboratory animal breeding cage which is excellent in visibility and allows for easy removal of deposited excrement on the surface of the cage. Another objective is to provide a method for producing such a laboratory animal breeding cage.

### Solution to Problem

The above problems can be solved by providing a laboratory animal breeding cage comprising a bottom and a side wall and having an opening at the top, whose shape in a planar view is rectangular, wherein
the cage is composed of a transparent part made of a transparent thermoplastic resin and an opaque part made of an opaque resin composition comprising a thermoplastic resin and a filler;
at least corner sections of the upper surface of the bottom are made up of the opaque part while at least the upper half of the side wall is made up of the transparent part; and
the transparent part and the opaque part are adhered to each other.

Here, it is preferable that the whole upper surface of the bottom is made up of the opaque part. The whole lower surface of the bottom can be made up of the transparent part. The whole bottom can be made up of the opaque part. Furthermore, the side wall can be composed of the opaque part extending from the corner sections of the bottom upward to the opening end, and four transparent parts.

Here, it is preferable that a haze value of a 3-mm-thick molded article made of the transparent thermoplastic resin is 40% or less while a haze value of a 3-mm-thick molded article made of the opaque resin composition is 80% or more. It is also preferable that a boundary between the transparent part and the opaque part is located at a position that is 5 mm or more above the upper surface of the bottom of the cage and below the midpoint between the upper surface and the opening end.

It is also preferable that the thermoplastic resin contained in the transparent part and the opaque part is an amorphous resin with a glass transition temperature of 120 to 200 °C. It is more preferable that the thermoplastic resin contained in the transparent part and the opaque part is a cyclic olefin polymer. It is further preferable that the resin composition in the opaque part further comprises a thermoplastic soft copolymer in addition to the cyclic olefin polymer and the filler.

Here, it is preferable that the filler contained in the resin composition in the opaque part is silicone resin particles, fluororesin particles or cleavable inorganic particles. It is also preferable that the resin composition in the opaque part comprises 50 to 99.9% by mass of the thermoplastic resin and 0.1 to 50% by mass of the filler.

The above problems can be solved by providing a method for producing the laboratory animal breeding cage as described above, comprising adhering the transparent part and the opaque part to each other by two-color molding, insert molding or ultrasonic fusion. Here, it is preferable that a sheet made of the opaque resin composition is thermally molded to form the opaque part; the opaque part is placed in a mold; then the transparent thermoplastic resin is injection molded; and the transparent part and the opaque part are adhered to each other by the insert molding.

### Advantageous Effects of Invention

The laboratory animal breeding cage of the present invention is excellent in visibility and allows for easy removal of deposited excrement on the surface of the cage. Furthermore, according to a production method of the present invention, such a laboratory animal breeding cage can be easily produced.

### Brief Description of Drawings

FIG. 1 shows a perspective view and a plan view of a laboratory animal breeding cage according to Embodiment 1.
FIG. 2 shows a cross-sectional view taken along line A-A in the plan view of FIG. 1 and a partially enlarged view thereof.
FIG. 3 shows a perspective view of an opaque part in Embodiment 1.
FIG. 4 shows a perspective view of an opaque part for ultrasonic fusion in Embodiment 1 as seen from the front side; a perspective view as seen from the back side; and a partially enlarged view thereof.
FIG. 5 shows a perspective view and a plan view of a laboratory animal breeding cage of Embodiment 2.
FIG. 6 shows a cross-sectional view taken along line A-A in the plan view of FIG. 5 and a partially enlarged view thereof.
FIG. 7 shows a perspective view and a plan view of the laboratory animal breeding cage of Embodiment 3.
FIG. 8 shows a cross-sectional view taken along line A-A in the plan view of FIG. 7 and a partially enlarged view thereof.
FIG. 9 shows a perspective view of the opaque part in Embodiment 3.
FIG. 10 shows a perspective view and a plan view of the laboratory animal breeding cage of Embodiment 4.
FIG. 11 shows a cross-sectional view taken along line A-A in the plan view of FIG. 10 and a partially enlarged view thereof.
FIG. 12 shows a perspective view of the opaque part in Embodiment 4.

### Description of Embodiments

The present invention relates to a laboratory animal breeding cage comprising a bottom and a side wall and having an opening at the top, whose shape in a planar view is rectangular, wherein
the cage is composed of a transparent part made of a transparent thermoplastic resin and an opaque part made of an opaque resin composition comprising a thermoplastic resin and a filler;
at least corner sections of the upper surface of the bottom is made up of the opaque part while at least the upper half of the side wall is made up of the transparent part; and
the transparent part and the opaque part are adhered to each other.

The most notable feature of the laboratory animal breeding cage of the present invention is that it is composed of a transparent part and an opaque part. The transparent part provides excellent visibility from the outside, while the opaque part makes it easy to remove excrement. Properly combining these, it is possible to achieve excellent visibility and easy removal of deposited excrement. First, there will be described the materials of the transparent and opaque parts.

The transparent part is made of a transparent thermoplastic resin.

At least the upper half of the side wall of the laboratory animal breeding cage of the present invention is made of the transparent part, so that laboratory animals inside the cage can be easily visually observed from the outside. In the light of good visibility, a haze value of a 3-mm-thick molded article made of the transparent thermoplastic resin used for the transparent part is preferably 40% or less, more preferably 20% or less, and even more preferably 10% or less.

In order to obtain excellent transparency and dimensional accuracy, the thermoplastic resin is preferably an amorphous resin. A glass transition temperature (Tg) of the amorphous resin is preferably 120 to 230°C. With a glass transition temperature being 120°C or higher, the resin can withstand sterilization, for example, in an autoclave. The glass transition temperature is more preferably 130°C or higher, further preferably 135°C or higher. With the glass transition temperature being 230°C or lower, flowability during molding is improved, and the resin can be easily melt molded. The glass transition temperature is more preferably 200°C or lower, further preferably 180°C or lower. A glass transition temperature is determined by a DSC method (temperature rising rate: 10°C/min). Specific examples of an amorphous thermoplastic resins include cyclic olefin polymers, polycarbonates, polysulfones, polyether sulfones, polyphenylsulfones, and polyarylates.

Among these amorphous thermoplastic resins, cyclic olefin polymers are preferred. A cyclic olefin polymer can be a polymer made by polymerizing olefin monomers each having an alicyclic skeleton alone, or can be a copolymer of olefin monomers each having an alicyclic skeleton with other copolymerizable monomers. The copolymerization amount of the other monomer is usually less than 50% by mass, preferably less than 40% by mass, more preferably less than 30% by mass. The cyclic olefin polymer is a polymer having a saturated hydrocarbon ring structure in the main chain or side chain of the polymer, and is a transparent amorphous polymer. Since it is a polyolefin, it is low water absorbable, and even when it is in contact with hot water or steam through an autoclave treatment, etc., it is resistant to deformation or deterioration, maintaining transparency and strength. Moreover, it is less likely to generate volatile organic compounds, which is also preferable from the viewpoint of animal welfare.

Specific examples of a cyclic olefin polymer include addition polymers of a monomer having a norbornene ring with an α-olefin, which are sold by Mitsui Chemicals, Inc. under the trade name "APEL" and by Polyplastics Co., Ltd. under the trade name "TOPAS". Other examples include ring-opening polymers of a monomer having a norbornene ring and hydrogenated products thereof, which are sold by Zeon Corporation under the trade names "ZEONEX" and "ZEONOR". All of the above cyclic olefin polymers are readily commercially available. The chemical structure of the cyclic olefin monomer having a norbornene ring as used herein is as shown in Formula [I].

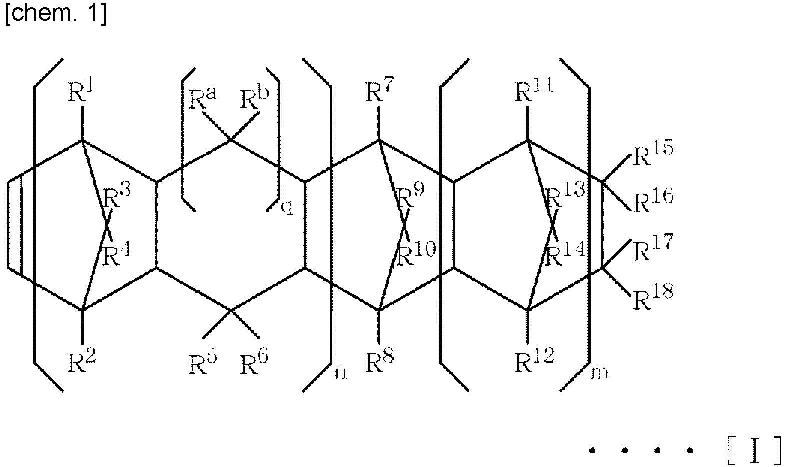

In the above formula [I], n is 0 or 1; m is 0 or a positive integer; q is 0 or 1; R¹ to R¹⁸ and R^{a} and R^{b} are independently of each other a hydrogen atom, a halogen atom or a hydrocarbon group; R¹⁵ to R¹⁸ can be bonded to each other to form a monocyclic or polycyclic ring, and the monocyclic or the polycyclic ring can have a double bond, and R¹⁵ and R¹⁶, or R¹⁷ and R¹⁸ can be combined to form an alkylidene group.

Preferred examples of the monomer having a norbornene ring include norbornene (n=0; m=0; and R⁷ to R¹⁰ and R¹⁵ to R¹⁸ are all hydrogen atoms) and tetracyclo[4.4.0.1^{2,5}.1^{7,10}]-3-dodecene (n=0; m=1; and R⁷ to R18 are all hydrogen atoms).

A preferred addition polymer of a monomer having a norbornene ring with α-olefin is an ethylene-cyclic olefin random copolymer. In the light of heat resistance, rigidity and the like, an ethylene content is preferably 5 to 50% by mass. The ethylene content is more preferably 10% by mass or more, further preferably 15% by mass or more. Moreover, the ethylene content is more preferably 40% by mass or less, further preferably 30% by mass or less.

A preferable polycarbonate is a bisphenol-A type polycarbonate which is excellent in transparency and impact resistance. However, a polycarbonate has low hardness, so that it is easily scratched. In addition, repeated autoclaving of a polycarbonate may reduce its strength. A polysulfone, a polyether sulfone, a polyphenylsulfone and a polyarylate have a high glass transition point and is therefore excellent in heat resistance and highly strong, but are less fluid during melt molding, which may make melt molding difficult.

In addition, even a crystalline resin may be, when it is highly transparent, used as a transparent part of the cage of the present invention. For example, a polymethylpentene is a crystalline resin having good transparency. However, in the case of the crystalline resin, deformation may occur due to further crystallization during autoclave sterilization, and there may be a risk of poor fitting with a lid. When a transparent crystalline resin is used, a preferable melting point is typically 180 to 300°C.

The transparent part can contain additives as long as transparency required for the present invention is not impaired. For example, it can contain various additives such as other resins, colorants, ultraviolet absorbers, plasticizers, antioxidants, heat stabilizers, lubricants, and antimicrobial agents in small amounts.

Meanwhile, the opaque part is made of an opaque resin composition containing a thermoplastic resin and a filler. Therefore, for the resin composition of the opaque part, filler particles are dispersed in a matrix of the thermoplastic resin. The fillers contained allow for easy removal of deposited excrement. A haze value of a 3-mm-thick molded article made of the opaque resin composition is generally 80% or more, optionally 85% or more, and optionally 90% or more. When the opaque part has such a high haze value, it is difficult to observe the laboratory animal inside through the opaque part, but in the cage of the present invention, transparent parts are arranged at positions where observation is required, so that the laboratory animal can be observed.

The thermoplastic resin contained in the opaque part can be the same as the transparent thermoplastic resin. In order to improve adhesion between the transparent part and the opaque part, it is preferable that the thermoplastic resin contained in the transparent part and the thermoplastic resin contained in the opaque part are the same type of resin. In other words, it is preferable to form the opaque part by blending a filler with the same type of thermoplastic resin as the thermoplastic resin constituting the transparent part. This allows these to be firmly bonded together without using an adhesive. If the transparent part and the opaque part are bonded together using an adhesive, the thermoplastic resin contained in the transparent part and the thermoplastic resin contained in the opaque part may be different types, but it is preferable to fuse them together without using an adhesive, in the light of thermal expansion during autoclave sterilization.

A suitable example of the thermoplastic resin used in the opaque part can be a cyclic olefin polymer. Since the cyclic olefin polymer has a lower water absorption rate, it is less deformed during autoclave sterilization and thus can be easily dried. In addition, a filler blended with the cyclic olefin polymer allows for easy removal of excrement.

It is preferable that the resin composition of the opaque part further contains a thermoplastic soft copolymer in addition to the cyclic olefin polymer and the filler. With the soft copolymer, impact resistance is improved. Even if the soft copolymer is contained, the opaque part can well adhere to the cyclic olefin polymer of the transparent part because the base polymer is a cyclic olefin polymer. Here, the resin composition containing the cyclic olefin polymer and the thermoplastic soft copolymer is preferably a resin composition obtained by melt-kneading 100 parts by mass of the cyclic olefin polymer, 1 to 50 parts by mass of the soft copolymer, 0.001 to 1 part by mass of a radical initiator, and 0 to 1 part by mass of a polyfunctional compound. Such a resin composition is disclosed in International Publication No. WO 2006/025294. In addition, such a resin composition is sold, for example, by Fuji Bakelite Co., Ltd. under the trade name of "e-mateX", so it is sufficient to blend a filler therewith.

The thermoplastic soft copolymer is obtained by polymerizing at least two or more monomers selected from the group consisting of olefins, dienes, and aromatic vinyl hydrocarbons, and has a glass transition temperature of 0°C or lower. A specific example is an amorphous or low-crystalline thermoplastic soft copolymer obtained by copolymerizing ethylene with an α-olefin having 3 to 20 carbon atoms, preferably an ethylene-propylene copolymer. A glass transition temperature of the thermoplastic soft copolymer is preferably -10°C or lower, more preferably -20°C or lower. The glass transition temperature is generally -100°C or higher. A crystallinity as determined by X-ray diffraction is preferably 0 to 30%, more preferably 0 to 25%.

The radical initiator can be, but not limited to, any type that generates radicals by thermal decomposition due to heating during melt-kneading. Examples include peroxides, azo compounds, and redox initiators. Among these, organic peroxides are preferably used. The radical initiator preferably decomposes at an appropriate rate during melt-kneading, and a one-minute half-life temperature is preferably 30 to 250°C. The one-minute half-life temperature is more preferably 50°C or higher and 200°C or lower.

The polyfunctional compound is a compound having two or more radically polymerizable functional groups in one molecule. Examples of the polyfunctional compound include divinylbenzene, vinyl acrylate, vinyl methacrylate, triaryl isocyanurate, diaryl phthalate, ethylene dimethacrylate, and trimethylolpropane trimethacrylate.

For the opaque part, preferable examples of the filler blended with the thermoplastic resin include, but not limited to, silicone resin particles, fluororesin particles, and cleavable inorganic particles.

The silicone resin particles are preferably particles of a resin mainly composed of polydimethylsiloxane. Specifically, particles containing 50% by mass or more of polydimethylsiloxane are preferable. In the light of affinity for the thermoplastic resin constituting a matrix, it is preferable that the particles contain other polymer components that are free from silicon atoms. For example, particles of a copolymer in which an acrylate polymer and polydimethylsiloxane are complexed are preferable. A content of the other polymer components in the particles is preferably 50% by mass or less, more preferably 40% by mass or less. Here, the content of polydimethylsiloxane is preferably 50% by mass or more, more preferably 60% by mass or more. Furthermore, the content of the other polymer components is preferably 5% by mass or more, more preferably 10% by mass or more, further preferably 20% by mass or more. Here, the content of polydimethylsiloxane is preferably 95% by mass or less, more preferably 90% by mass or less, further preferably 80% by mass or less.

The fluororesin particles are preferably polytetrafluoroethylene particles. The polytetrafluoroethylene can contain less than 50% by mass of other copolymerizable monomers.

Cleavage inorganic particles are crystalline inorganic particles that can be easily peeled off in layers along the crystal plane with small force. The crystal structure contains a plane (cleavage plane) where a bonding force between atoms is small, and with small shear force, the layers easily peel off and slide along the cleavage plane to generate flakes. Such crystalline inorganic particles are widely used as a solid lubricant due to their slipperiness. Specific examples of cleavage inorganic particles include layered silicate particles, molybdenum disulfide particles, boron nitride particles and graphite particles. Among these, layered silicate particles are particles with a multilayer structure mainly composed of a silicate compound, including talc and mica.

An average particle diameter of the filler blended with the thermoplastic resin is preferably 0.5 to 100 µm. If the average particle diameter is too small, unevenness of the molded article surface may become too small, making it difficult to remove deposited excrement on the molded article surface. The average particle diameter is more preferably 1 µm or more, further preferably 1.5 µm or more. On the other hand, if the average particle diameter is too large, unevenness of the molded article surface may become too large, also making it difficult to remove deposited excrement on the molded article surface. The average particle diameter is more preferably 70 µm or less, further preferably 50 µm or less.

It is preferable that the resin composition of the opaque part contains 50 to 99.9% by mass of a thermoplastic resin and 0.1 to 50% by mass of a filler. When the content of the filler is 0.1% by mass or more, a friction coefficient of the molded article surface can be effectively reduced. The content of the filler is more preferably 1% by mass or more, further preferably 2% by mass or more. Here, the content of the thermoplastic resin is more preferably 99% by mass or less, further preferably 98% by mass or less. With the content of the filler being 50% by mass or less, melt moldability is improved. The content of the filler is more preferably 40% by mass or less. Here, the content of the thermoplastic resin is more preferably 60% by mass or more.

A dynamic friction coefficient of the surface of the opaque part is preferably 0.3 or less, more preferably 0.2 or less, and further preferably 0.16 or less. With the dynamic friction coefficient of the opaque part being small, it can be easy to remove deposited excrement on the surface of the molded article.

In addition, it is preferable that the filler is exposed on the surface of the opaque part, which makes it easier to remove excrement. A surface roughness (Ra) of the surface of the opaque part is preferably 0.08 to 1 µm. With Ra being within this range, deposited excrement on the surface of the molded article can be easily removed. Ra is more preferably 0.1 µm or more. On the other hand, Ra is more preferably 0.5 µm or less, and further preferably 0.3 µm or less. When primary particles are aggregated to form secondary particles, it is only necessary that the particle diameter of the secondary particles satisfy the above range.

There will be described specific embodiments of the laboratory animal breeding cage of the present invention with reference to the drawings.

### [Embodiment 1]

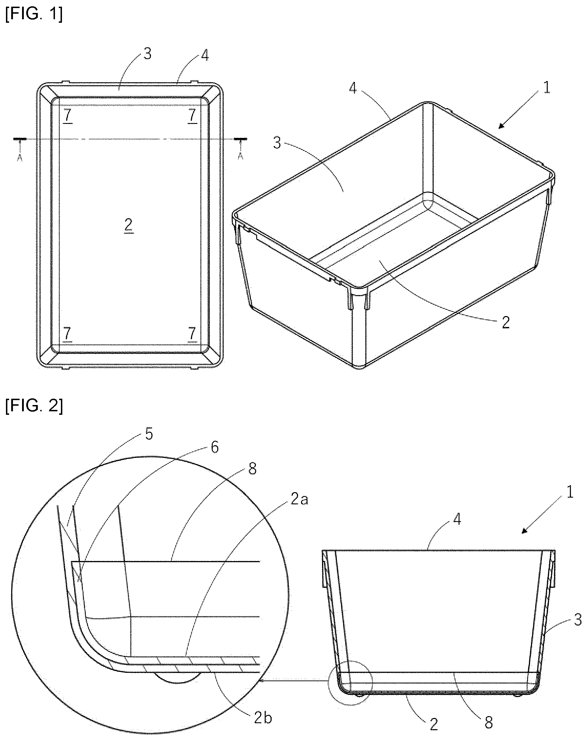

Fig. 1 shows a perspective view and a plan view of a laboratory animal breeding cage 1 of Embodiment 1. Fig. 2 shows a cross-sectional view taken along line A-A in the plan view of Fig. 1 and a partially enlarged view thereof.

The laboratory animal breeding cage 1 has a bottom 2 and side walls 3, and is rectangular in planar view and opens upward. At the opening end 4, a long side is 353 mm and a short side is 235 mm, and a height of the cage 1 is 160 mm. A plastic or metal mesh lid (not shown) is placed over the opening end 4 such that it contacts the opening end 4, and laboratory animals are bred in the cage 1. In FIG. 1, most of the side walls 3 and the entire lower surface 2b of the bottom are made of a transparent part 5, and the entire upper surface 2a of the bottom is made of an opaque part 6. Since most of the side walls 3 are made of the transparent part 5, laboratory animals can be easily observed from the outside. Since the entire upper surface 2a of the bottom is made up of the opaque part 6, deposited excrement on the cage 1 can be easily removed.

In a typical environment of laboratory animal breeding, the bottom of the cage 1 is covered with bedding made of shredded paper, pulp, wood or the like. Therefore, visibility of the inside of the cage 1 from the lower part of the side wall 3 or the bottom 2 is not a problem in most cases. Thus, in the configuration of Embodiment 1, a material with which excrement can be easily removed is used instead of making the bottom 2 opaque in compensation for visibility loss. Meanwhile, most of the side wall 3 is made of the transparent part 5, so there are no problems in visually checking the status of the laboratory animals from the outside. The laboratory animal breeding cage 1 of the present invention has a configuration in which a material with which excrement can be easily removed and a material with good transparency are arranged in appropriate locations, making it possible to achieve both visibility from the outside and ease of removing excrement.

In Embodiment 1, the bottom 2 has a two-layer structure, in which the entire upper surface 2a is made up of the opaque part 6, and the entire lower surface 2b is made up of the transparent part 5. The opaque part 6 is formed in the side wall 3 up to a height of 20 mm from the upper surface 2a of the bottom. Experimental animals such as mice and rats mainly excrete on the upper surface 2a of the bottom, but they often excrete in fixed places such as corner sections 7, in which excrement tend to deposit. Thus, excrement deposits on the lower part of the side wall 3. It is, therefore, important that the excrement in that part can be easily removed. In the cage 1 of the present invention, it is preferable that the boundary 8 between the transparent part 5 and the opaque part 6 is located at a position that is 5 mm or more above the upper surface 2a of the bottom of the cage 1 and below the midpoint between the upper surface 2a and the opening end 4. With the boundary 8 being located at a position of 5 mm or more above the upper surface 2a, excrement deposited on the side wall 3 can be easily removed. More preferably, the boundary 8 is located at a position of 10 mm or more above the upper surface 2a. On the other hand, with the boundary 8 being below the midpoint between the upper surface 2a and the opening end 4, visibility of the inside is improved. A distance from the boundary 8 to the upper surface 2a is more preferably 50 mm or less, further preferably 30 mm or less. Here, the boundary 8 refers to the upper end of the opaque part 6 in the side wall 3. The boundary 8 is also useful as a guide for the thickness of the bedding, and it is also applied to the other Embodiments.

A method for producing the cage 1 of Embodiment 1 is preferably, but not limited to, insert molding, two-color molding or ultrasonic fusion. Each of the production methods will be described below.

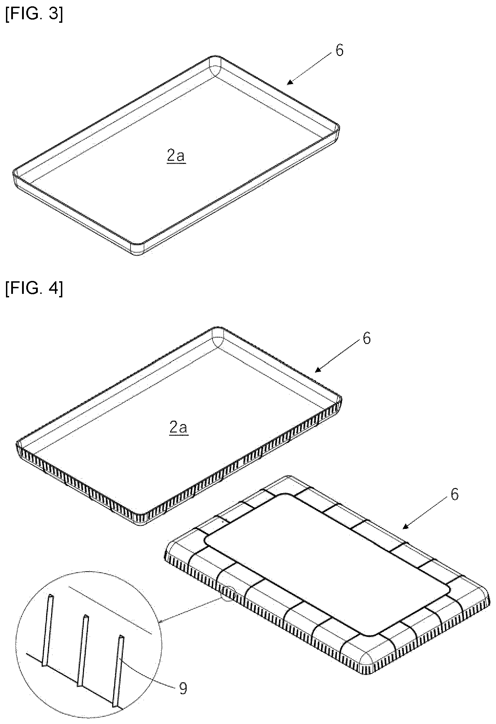

FIG.3 shows a perspective view of the opaque part 6 in Embodiment 1, which constitutes the upper surface 2a of the bottom. The opaque part 6 with a thickness of about 1 mm can be molded by injection molding or thermoforming. When molded by injection molding, the cage 1 can be molded by two-color molding or insert molding.

First, two-color molding will be described. Here, a resin composition containing a thermoplastic resin and a filler is injected into a cavity formed between the common mold and the first exchange mold to form the opaque part 6 shown in Fig. 3. The first exchange mold is replaced with a second exchange mold while the opaque part 6 is held in the common mold, and a thermoplastic resin is injected into the cavity formed between the common mold, the second exchange mold, and the opaque part 6 to form the transparent part 5, which is integrated with the opaque part 6 to produce the cage 1. Here, a high-strength molded article without a weld line can be obtained by providing an inflow gate for a molten transparent resin near the center of the lower surface 2b of the bottom.

Next, insert molding will be described. Here, the opaque part 6 shown in FIG. 3 is molded in advance, placed in the mold of the injection molding machine, and then injection molded to manufacture the cage 1. The opaque part 6 can be molded by thermoforming or injection molding, but thermoforming is preferred in the light of a manufacturing cost of the mold. A method is preferably adopted, in which the opaque part 6 obtained by thermoforming is introduced into a mold, and then a transparent thermoplastic resin is injection molded in the mold, and the transparent part 5 and the opaque part 6 are bonded by insert molding. In the thermoforming, a sheet is extrusion-molded in advance and is thermoformed by vacuum molding or vacuum pressure molding with heating. The arrangement of the inflow gate of the transparent resin in insert molding is as in two-color molding.

FIG. 4 also shows the opaque part 6 in Embodiment 1, which constitutes the upper surface 2a of the bottom. FIG. 4 shows a perspective view of the opaque part 6 as seen from the front side and a perspective view as seen from the back side, and a partially enlarged view thereof. In the opaque part 6 in FIG. 4, a plurality of ribs 9 are provided at a predetermined interval in the bonding portion with the transparent part 5. The transparent part 5 separately molded by injection molding can be prepared, and then it can be overlapped with the opaque part 6 in FIG. 4, and the two can be bonded together by ultrasonic fusion. Here, the ribs 9 formed on the opaque part 6 are molten by ultrasonic vibration and fused to the transparent part 5.

### [Embodiment 2]

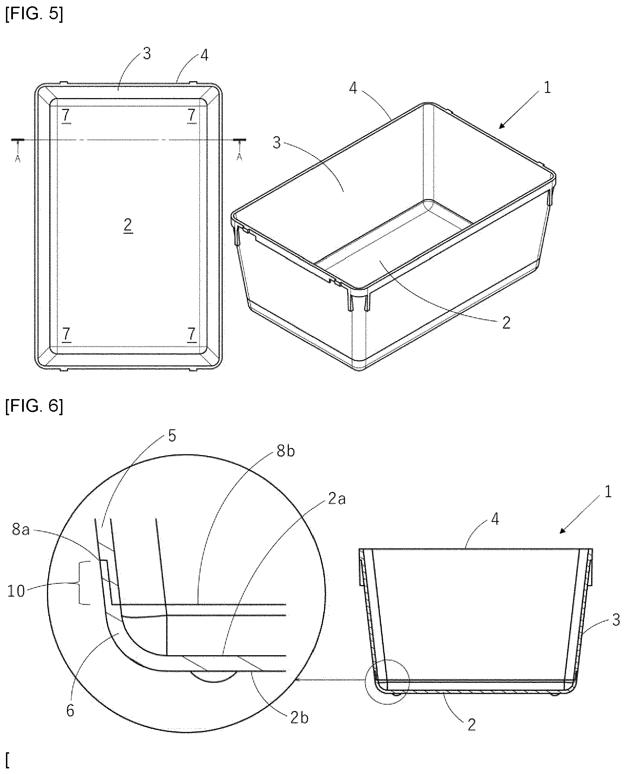

FIG. 5 is a perspective view and a plan view of a laboratory animal breeding cage 1 of Embodiment 2. FIG. 6 shows a cross-sectional view taken along line A-A in the plan view of FIG. 5 and a partially enlarged view thereof. The external shape, dimensions and method of use of the laboratory animal breeding cage 1 are as those of Embodiment 1. In Embodiment 2, most of the side wall 3 is made up of a transparent part 5, and the entire bottom 2 is made up of an opaque part 6. It differs from Embodiment 1 in that the bottom 2 has a single-layer structure.

In Embodiment 2, both transparent part 5 and opaque part 6 are molded by injection molding. Two-color molding, insert molding or ultrasonic fusion is employed as a molding method. Although in Embodiment 1, fluidity during melt molding of the transparent thermoplastic resin by two-color molding or insert molding may be a problem since the thickness of the transparent part 6 on the lower surface 2b side of the bottom is small, Embodiment 2 does not have such a problem. On the other hand, since a weld line is likely to generate during molding of the transparent part 5, the method is selected according to a required performance as appropriate.

In Embodiment 2, an adhesive region 10 is provided at the boundary between the transparent part 5 and the opaque part 6 where they overlap, ensuring the adhesiveness of both. In the case of ultrasonic fusion, a rib (not shown) is formed in either the transparent part 5 or the opaque part 6 in the adhesive region 10. Since the adhesive region 10 exists in Embodiment 2, the position of the boundary 8 between the transparent part 5 and the opaque part 6 can take two values. The upper limit value is set from the viewpoint of visibility, so it follows the upper boundary 8a located at the highest position where the opaque part 6 exists. On the other hand, the lower limit value is set from the viewpoint of excrement deposition, so it follows the lower boundary 8b located at the inner boundary position of the cage.

### [Embodiment 3]

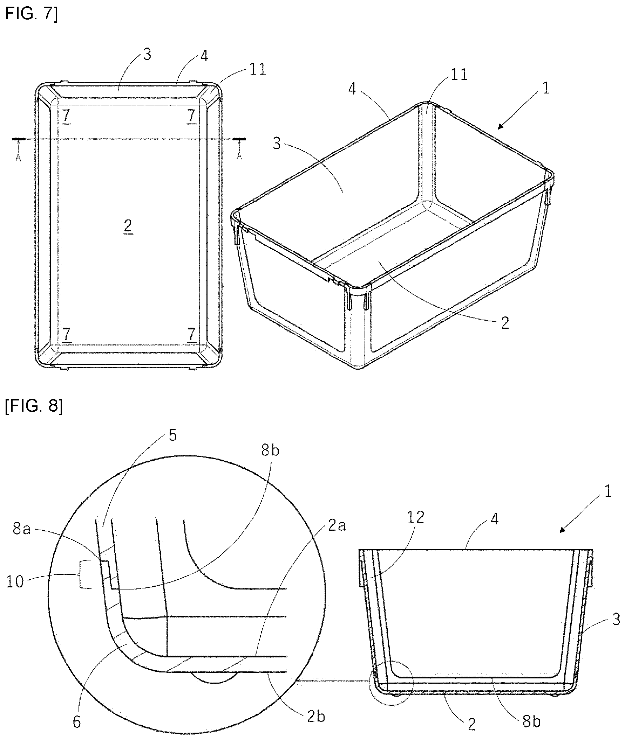

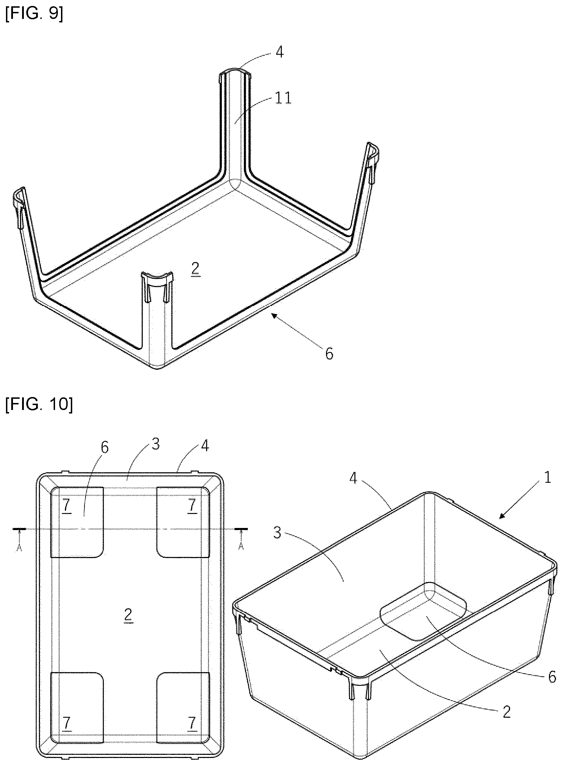

FIG. 7 shows a perspective view and a plan view of a laboratory animal breeding cage 1 of Embodiment 3. FIG. 8 shows a cross-sectional view taken along line A-A in the plan view of FIG. 7 and a partially enlarged view thereof. An external shape, dimensions, and method of use of the laboratory animal breeding cage 1 are as those of Embodiment 1. FIG. 9 shows a perspective view of the opaque part 6 in Embodiment 3. Embodiment 3 is the same as Embodiment 2 in that the entire bottom 2 is composed of the opaque part 6, but differs from Embodiment 2 in that the corner sections 7 have pillar parts 11. In other words, the side wall portion 3 is composed of pillar parts 11 made up of the opaque part 6 extending upward from the corner sections 7 of the bottom 2 to the opening end 4, and four transparent parts 5.

For Embodiment 3, both transparent part 5 and opaque part 6 are molded by injection molding. A molding method employed is two-color molding, insert molding, or ultrasonic fusion. Although in Embodiment 2, a weld line is likely to generate during molding of a transparent resin, in Embodiment 3, two-color molding or insert molding can be performed without generating weld lines by injecting the transparent resin from four gates after the opaque part 6 is injection molded in advance. Here, an adhesive region 10 where the transparent part 5 and the opaque part 6 overlap is provided at the boundary 8 between them, ensuring the adhesiveness of both. In the case of ultrasonic fusion, a rib (not shown) is formed in either the transparent part 5 or the opaque part 6 in the adhesive region 10. In Embodiment 3, though the opaque part 6 has pillar parts 11, the position of the boundary 8 between the transparent part 5 and the opaque parts 6 is considered as that in Embodiment 2 while ignoring the pillar parts 11.

### [Embodiment 4]

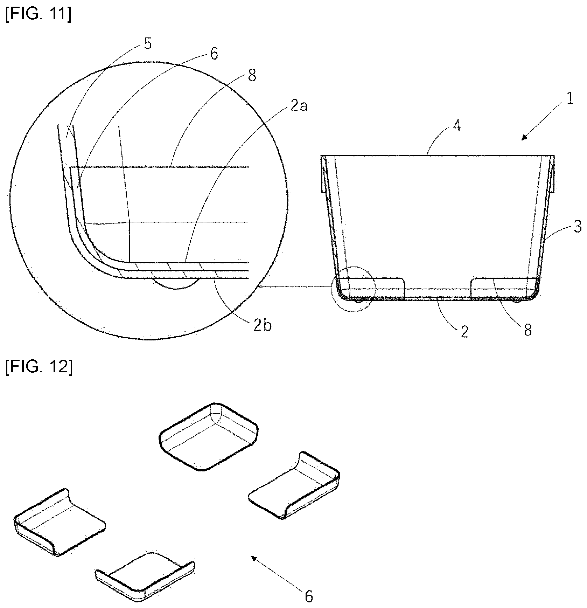

FIG. 10 shows a perspective view and a plan view of a laboratory animal breeding cage of Embodiment 4. FIG. 11 shows a cross-sectional view taken along line A-A in the plan view of FIG. 10 and a partially enlarged view thereof. An external shape, dimensions, and method of use of the laboratory animal breeding cage 1 are as those of Embodiment 1. FIG. 12 shows four opaque parts 6. Embodiment 4 differs from Embodiment 1 in that the opaque part 6 is divided into four parts. Since laboratory animals often excrete in the corner sections 7, these sections are divided into four opaque parts 6. Furthermore, the entire lower surface 2b of the bottom is made up of a transparent part 5.

For Embodiment 4, the molding method of the opaque part 6 can be injection molding or thermoforming. In either case, it can be molded by two-color molding or insert molding. In the case of ultrasonic fusion, a rib (not shown) is formed in either the transparent part 5 or the opaque part 6 in the region where they overlap. In Embodiment 4, the transparent part 5 extends to the bottom 2, and there is a transparent area in the bottom 2, but the position of the boundary 8 between the transparent part 5 and the opaque part 6 is the upper end of the opaque part 6 near the corner sections 7.

### Examples

The materials used in the present invention were specifically evaluated using the following examples.

### Example 1

In an extruder were melt-kneaded and reacted 100 parts by mass of the following cyclic olefin polymer (a), 11 parts by mass of an ethylene-propylene random copolymer (b), 0.022 parts by mass of a radical initiator (c), and 0.022 parts by mass of a polyfunctional compound (d), which was then pelletized to obtain modified COC pellets.

### - Cyclic olefin polymer (a)

"APELAPL6015T", a cyclic olefin copolymer (COC) manufactured by Mitsui Chemicals, Inc. This COC is an addition copolymer of ethylene and tetracyclo[4.4.0.1^{2,5}.1^{7,10}]-3-dodecene, and is amorphous. A glass transition temperature (temperature rise rate: 10°C/min) as measured by DSC is 145°C, and the MFR (260°C, 2.16 kg load) is 10 g/10 min.

### - Soft copolymer (b)

Ethylene-propylene random copolymer "P-0880" manufactured by Mitsui Chemicals, Inc. It has an ethylene content of 80 mol%, an intrinsic viscosity [η] of 2.5 dL/g, and a glass transition temperature as measured by DSC method (temperature rise rate: 10°C/min) of -54°C. MFR (230°C, 2.16 kg load) is 0.4 g/10 min; a density is 0.867 g/cm³, and a crystallinity as measured by X-ray diffraction method is about 10%.

### - Radical initiator (c)

"PERHEXYNE 25B" manufactured by Nippon Oil & Fats Co., Ltd. The main component (90% or more) is 2,5-dimethyl-2,5-bis(t-butylperoxy)hexyne-3. A one-minute half-life temperature is 194.3°C.

### - Polyfunctional compound (d)

### Divinylbenzene

Into an extruder were placed 95 parts by mass of the modified COC pellets thus obtained and 5 parts by mass of silicone resin powder "CHALINE R-170S" manufactured by Nissin Chemical Industry Co., Ltd., which was then melt-kneaded to give composition pellets. Here, "CHALINE R-170S" is a resin powder obtained by copolymerizing a silicone and an acrylate, with a silicone content of 70% by mass and an acrylate content of 30% by mass. It is a powder containing spherical particles with an average particle diameter of 30 µm (primary particle diameter: 0.2 to 0.3 µm). The composition pellets thus obtained were placed in an injection molding machine to produce disk-shaped test pieces with a diameter of 15 cm and a thickness of 3 mm.

### [Observation of surface condition]

The surface of the obtained test piece was observed with a laser microscope "LEXT OLS4100" manufactured by Olympus Corporation, and exposure status of the filler was evaluated as follows: In this test piece, finely dispersed particles were exposed on the surface of the test piece, which was rated as A.
- A: Finely dispersed particles were exposed on the surface of the test piece.
- B: Filler particles were exposed on the surface of the test piece, but coarse particles were included.

### [Surface roughness]

A surface roughness (Ra) of the test piece was measured in accordance with JIS B0633 using a laser microscope "LEXT OLS4100" manufactured by Olympus Corporation, and was found to be 0.13 µm.

### [Dynamic friction coefficient]

A dynamic friction coefficient of the test piece surface was measured according to JIS K7125 using a universal testing machine "RCT-1325 TENSILON" manufactured by A&D Company, Limited, and Ra was found to be 0.107.

### [Haze]

Haze of the test piece was measured in accordance with JIS K7136. Specifically, a haze meter "HV-V3" manufactured by Suga Test Instruments Co., Ltd. was used to measure a haze using a D65 light source in a double beam system. Five samples were measured, and an average value was calculated, resulting in a haze of 95.1%.

### [Excrement removal test]

Water was added to dry excrement collected from the cages in which mice were bred, to make it clay. On one side of the above test pieces (n=4) was smeared with 15 to 20 g of the excrement clay and allowed to stand outside for drying. Removability of the excrement was then evaluated using the following three-stage method. As a result, it was rated as A in a shake-off test; a mechanical removal test was not performed; and it was rated as A in a water washing test. The procedures and the evaluation criteria for these tests are as follows. The above results are summarized in Table 1.

### (Shake-off test)

A test piece with dry excrement was held in hand and shaken. Removability was evaluated according to the following criteria.
- A: Peeling occurred in all four samples.
- B: Peeling occurred in three samples.
- C: Peeling occurred in two samples.
- D: Peeling occurred in one sample or less.

### (Mechanical Removal Test)

For samples that could not be shaken off in the shake-off test (samples rated B to D), the dry excrement was manually removed using a rubber spatula. Removability was evaluated according to the following criteria.
- A: Easily peeled off with little force.
- B: Peeled off with slight rubbing.
- C: Not peeled off with slight rubbing in some samples.

### (Water washing test)

The samples that had been subjected to the shake-off test and mechanical removal test were subjected to this test. The surface of the test piece on which the excrement had adhered was washed by spraying water on it and rubbing it lightly with the rubber-gloved fingertips. The excrement remaining state on the surface of the samples after washing was evaluated according to the following criteria.
- A: Completely removed.
- B: Excrement remained attached.

### Example 2

Test pieces were prepared by injection molding as described in Example 1, substituting a polytetrafluoroethylene powder "Fluon PTFE G190" manufactured by AGC Inc. for the silicone resin powder. An average particle diameter (measured by laser diffraction method) of the particles contained in "Fluon PTFE G190" is 25 µm. The evaluation results of the obtained test pieces are summarized in Table 1.

### Example 3

Test pieces were prepared by injection molding as described in Example 1, substituting 30 parts by mass of talc powder "MICRO ACE SG-95" manufactured by Nippon Talc Co., Ltd. for 5 parts by mass of the silicone resin powder. A particle diameter (D50: measured by laser diffraction method) of the particles contained in "MICRO ACE SG-95" was 2.1 µm. The evaluation results of the obtained test pieces are summarized in Table 1.

### Example 4

Test pieces were prepared by injection molding as described in Example 1, substituting 30 parts by mass of mica powder "Repco Mica S-325" manufactured by Repco Inc. for 5 parts by mass of the silicone resin powder. The particles contained in "Repco Mica S-325" are phlogopite having an average particle diameter of 27 µm and an average aspect ratio of 30. The evaluation results of the obtained test pieces are summarized in Table 1.

### Comparative Example 1

Test pieces were prepared by injection molding as described in Example 1, except that the silicone resin powder was not blended and only the modified COC pellets were charged into the injection molding machine. The evaluation results are summarized in Table 1.

### Comparative Example 2

Test pieces were prepared by injection molding as described in Example 1, except that pellets of a cyclic olefin copolymer (COC), "APEL APL6015T" were charged into the injection molding machine. The evaluation results are summarized in Table 1.

### Example 5

Seventy parts by mass of polymethylpentene (TPX) "TPX MX004" manufactured by Mitsui Chemicals Inc. and 30 parts by mass of talc powder "MICRO ACE SG-95" manufactured by Nippon Talc Co., Ltd. were put into an extruder and melt-kneaded to provide composition pellets. Here, "TPX MX004" has a melting point of 228°C as measured by DSC method (temperature rise rate: 10°C/min) and an MFR (260°C, 5 kg load) of 25 g/10 min. The composition pellets thus obtained were put into an injection molding machine and injection molded as described in Example 1 to prepare test pieces. The evaluation results are summarized in Table 1.

### Example 6

Test pieces were prepared by injection molding as described in Example 5, substituting mica powder "Repco Mica S-325" manufactured by Repco Inc. for the talc powder. The evaluation results are summarized in Table 1.

### Comparative Example 3

Test pieces were prepared by injection molding as described in Example 1, except that pellets of polymethylpentene "TPX MX004" were charged into the injection molding machine. The evaluation results are shown in Table 1.

### Example 7

Seventy parts by mass of polycarbonate (PC) "Iupilon S-3000R" manufactured by Mitsubishi Engineering-Plastics Corporation and 30 parts by mass of mica powder "Repco Mica S-325" manufactured by Repco Inc. were put into an extruder and melt-kneaded to provide composition pellets. Here, "Iupilon S-3000R" is a bisphenol-A type polycarbonate, which is an amorphous resin with a glass transition temperature of 145°C as measured by DSC method (temperature rise rate: 10°C/min) and an MFR (300°C, 1.2 kg load) of 15 g/10 min. The composition pellets thus obtained were put into an injection molding machine and injection molded as described in Example 1 to prepare test pieces. The evaluation results are summarized in Table 1.

### Comparative Example 4

Test pieces were prepared by injection molding as described in Example 1, except that pellets of polycarbonate "Iupilon S-3000R" were charged into the injection molding machine. The evaluation results are shown in Table 1.

**[Table 1]**

| | Base resin | Filler | | Exposure status of filler | Surface roughness | Dynamic friction coefficient | Hase value % | Excrement removal test | | |
|---|---|---|---|---|---|---|---|---|---|---|
| | | Type | Amount | | Ra | | | Shake-off | Mechanical removal | Water washing |
| | | | % by mass | | µm | | | | | |
| Example 1 | Modified COC | Silicone resin | 5 | A | 0.13 | 0.107 | 95.1 | A | - | A |
| Example 2 | Modified COC | Fluororesin | 5 | B | 0.14 | 0.168 | 94.0 | A | - | A |
| Example 3 | Modified COC | Talc | 30 | A | 0.19 | 0.147 | 95.7 | A | - | A |
| Example 4 | Modified COC | Mica | 30 | B | 1.36 | 0.162 | 98.1 | C | A | A |
| Comparative Example 1 | Modified COC | - | 0 | - | 0.06 | 0.229 | 94.0 | B | B | A |
| Comparative Example 2 | COC | - | 0 | - | 0.02 | 0.568 | 2.0 | C | B | A |
| Example 5 | TPX | Talc | 30 | A | 0.15 | 0.308 | 92.8 | C | A | A |
| Example 6 | TPX | Mica | 30 | B | 0.39 | 0.398 | 98.1 | B | C | A |
| Comparative Example 3 | TPX | - | 0 | - | 0.06 | 0.272 | 3.8 | D | A | A |
| Example 7 | PC | Mica | 30 | B | 1.23 | 0.253 | 98.1 | C | A | A |
| Comparative Example 4 | PC | - | 0 | - | 0.08 | 0.256 | 4.5 | D | B | B |

### Reference Signs List

1: Laboratory animal breeding cage
2: Bottom
2a: Upper surface of the bottom
2b: Lower surface of the bottom
3: Side wall
4: Opening end
5: Transparent part
6: Opaque part
7: Corner sections
8: Boundary
8a: Upper boundary
8b: Lower boundary
9: Rib
10: Adhesive region
11: Pillar part

## Claims

1. A laboratory animal breeding cage comprising a bottom and a side wall and having an opening at the top, whose shape in a planar view is rectangular, wherein
the cage is composed of a transparent part made of a transparent thermoplastic resin and an opaque part made of an opaque resin composition comprising a thermoplastic resin and a filler;
at least corner sections of the upper surface of the bottom are made up of the opaque part while at least the upper half of the side wall is made up of the transparent part; and
the transparent part and the opaque part are adhered to each other.

2. The laboratory animal breeding cage as claimed in Claim 1, wherein the whole upper surface of the bottom is made up of the opaque part.

3. The laboratory animal breeding cage as claimed in Claim 1 or 2, wherein the whole lower surface of the bottom is made up of the transparent part.

4. The laboratory animal breeding cage as claimed in any of Claims 1 to 3, wherein the whole bottom is made up of the opaque part.

5. The laboratory animal breeding cage as claimed in Claim 4, wherein the side wall is composed of the opaque part extending from the corner sections of the bottom upward to the opening end, and four transparent parts.

6. The laboratory animal breeding cage as claimed in any of Claims 1 to 5, wherein a haze value of a 3-mm-thick molded article made of the transparent thermoplastic resin is 40% or less while a haze value of a 3-mm-thick molded article made of the opaque resin composition is 80% or more.

7. The laboratory animal breeding cage as claimed in any of Claims 1 to 6, wherein a boundary between the transparent part and the opaque part is located at a position that is 5 mm or more above the upper surface of the bottom of the cage and below the midpoint between the upper surface and the opening end.

8. The laboratory animal breeding cage as claimed in any of Claims 1 to 7, wherein the thermoplastic resin contained in the transparent part and the opaque part is an amorphous resin with a glass transition temperature of 120 to 230 °C.

9. The laboratory animal breeding cage as claimed in Claim 8, wherein the thermoplastic resin contained in the transparent part and the opaque part is a cyclic olefin polymer.

10. The laboratory animal breeding cage as claimed in Claim 9, wherein the resin composition in the opaque part further comprises a thermoplastic soft copolymer in addition to the cyclic olefin polymer and the filler.

11. The laboratory animal breeding cage as claimed in any of Claims 1 to 10, wherein the filler contained in the resin composition in the opaque part is silicone resin particles, fluororesin particles or cleavable inorganic particles.

12. The laboratory animal breeding cage as claimed in any of Claims 1 to 11, wherein the resin composition in the opaque part comprises 50 to 99.9% by mass of the thermoplastic resin and 0.1 to 50% by mass of the filler.

13. A method for producing the laboratory animal breeding cage as claimed in any of Claims 1 to 12, comprising adhering the transparent part and the opaque part to each other by two-color molding, insert molding or ultrasonic fusion.

14. The method for producing the laboratory animal breeding cage as claimed in Claim 13, comprising thermally molding a sheet made of the opaque resin composition to form the opaque part; placing the opaque part in a mold; then injection-molding the transparent thermoplastic resin; and adhering the transparent part and the opaque part to each other by the insert molding.
